# EUROPEAN PATENT SPECIFICATION

(11) **EP 1 230 816 B1**
(45) Date of publication and mention of the grant of the patent: **27.02.2008**
(21) Application number: 00970380.2
(22) Date of filing: 29.09.2000
(51) Int. Cl.: H04Q 7/38

(54) **A METHOD AND AN APPARATUS FOR SCHEDULING POSITION MEASUREMENTS**
VERFAHREN UND VORRICHTUNG ZUR PLANUNG VON POSITIONMESSUNGEN
PROCEDE ET APPAREIL DE PLANIFICATION DE MESURES DE POSITION

(30) Priority: 19.11.1999 SE 9904191
(43) Date of publication of application: 14.08.2002
(73) Proprietor: TELEFONAKTIEBOLAGET LM ERICSSON (publ), 164 83 Stockholm (SE)
(72) Inventor: ANDERSSON, Seved, S-281 37 Hässleholm (SE)
(74) Representative: Norin, Klas
(86) International application number: PCT/SE2000/001884
(87) International publication number: WO 2001/037601

(56) References cited:
- WO-A1-99/20064
- DE-A1- 19 815 429
- US-A- 5 365 451
- US-A- 5 802 468
- US-A- 5 974 329

## Description

### TECHNICAL FIELD OF THE INVENTION

The invention is related to a method and apparatus for scheduling. More specifically, the invention relates to a method and apparatus for scheduling position measurements of a mobile station operating in a radio communication network. The invention includes methods in which the scheduling method is applied as well as network nodes, radio communication networks and mobile stations in which the scheduling method is implemented.

### DESCRIPTION OF RELATED ART

Several techniques have been developed that can determine the geographical position of a mobile station. The geographical position is mostly presented as the latitude and longitude of the mobile station as measured by a positioning system. The position measurement result may also include an estimate of the accuracy of the determined position. The position information can be used for providing a number of different services, known as Location Dependent Services, where data about the position of the mobile station is used as a component in the service.

One such example is the Wireless E911 location determination mandated by the United States Federal Communications Commission for all types of public wireless networks. This requires the wireless networks to supply the location coordinates of the caller to a Public Safety Answering Point, that answers a 911 call. In E911 Phase II, which is to be in service in October 2001, the requirement is that the location is determined with an accuracy of 125 meters RMS.

Location Dependent Billing in a cellular network is another type of Location Dependent Service. The idea is to base the tariff for a call on the current geographical position of the mobile station engaged in the call. In the general case, the mobile service provider can offer the subscriber the possibility to specify a number of different geographical areas where different tariffs apply. Data about each area, like position, size, tariff, etc., is stored in one or several databases in the cellular network.

An example of a specific type of Location Dependent Billing application is called Home Zone Billing. The idea is that the subscriber is given a low tariff when calling within a home zone area and a higher tariff when calling outside the home zone area. The basic rationale for this type of service is that the mobile service provider will be able to position the cellular network as both an alternative and as a complement to the fixed telephone network. With a Home Zone Billing service, the cellular network can be an attractive alternative for new subscribers, where the cost for the installation of a fixed network would be high. For those that already have a fixed network subscription, a mobile subscription can be an attractive complement at home, when the fixed line is occupied for other uses than speech, like connection to the Internet or fax transmission. A location dependent billing function applies different charges to a mobile connection depending on the geographical position of the subscribers mobile station. Furthermore, the tariff used for the connection should be changed if the subscriber during the charged time period crosses the border between two areas with different tariffs.

U.S. Patent 5,774,802 describes a method where a multilateral location measurement is used to determine the position of a mobile station. The patent describes how this position can be used for the purpose of location dependent billing services. The patent describes a function where the charging is dependent upon the geographical position of the mobile station at call setup. The geographical position of the mobile station is compared to the geographical location of different tariff areas only upon call setup. Thus, the disclosed system is unable to detect if the mobile station crosses a tariff border during a call and consequently does not provide a true location dependent billing service allowing an established call to be re-rated when a tariff border is crossed.

The international patent application WO 98/09467 discusses a system where the propagation time for the radio signal between a mobile station and a base station is used as the basis for a positioning system. The geographical position of a subscriber is determined by the geographical location of the cell he is registered in and the propagation time for radio signals transmitted between the mobile station and the base station. The described positioning method is stated to be useful for location dependent charging functions. The patent application recognizes the need to perform repeated location measurements in order to determine if the subscriber leaves the area which is designated as the allowed area or the area with a lower tariff. The primary use of the function described in this patent application is in rural areas and for wireless local loop systems. According to WO 98/09467, the position of the mobile station is monitored constantly, i.e. at regular intervals, as long as it is within an area with a low tariff. When the mobile station moves out of such an area or establishes a call outside of a low tariff area, no further position monitoring is made. Accordingly, the system described in WO 98/09467 will only re-rate a call when the subscriber moves from an area with a low tariff to an area with a high tariff. If the subscriber during a call moves in the other direction, i.e. from an area with a high tariff into an area with a low tariff, no re-rating will be made since the system does not monitor the location of a mobile station engaged in a call when in a high rate area.

U.S. patent 5,568,153 discloses a method and system for administering a personal home area for a subscriber within a cellular telecommunications network having a number of cell sites. The method begins by storing in a home location register geographic coordinates of a home location for the subscriber and defining a personal home area centred on the home location of the subscriber. The method then determines a current geographic location of the subscriber upon invoking a service and determines whether the current geographic location of the subscriber is within the personal home area. Finally, the method includes setting parameters, e.g. billing rate, for the service to different values dependent on whether the subscriber is located inside or outside the personal home area. The current geographic location of the subscriber may be updated at handoff and the parameter values, e.g. charging rate, may be updated if the subscriber has entered or left the personal home area. However, if e.g. a subscribers personal home zone area is defined as part of a cell, and the subscriber during a call enters or exits the personal home zone area but remains within the cell, no handoff is performed and consequently no updating of the charging rate will occur.

### SUMMARY OF THE INVENTION

The problem dealt with by the present invention is to provide a way of monitoring the current position of a mobile station, operating in a radio communication network, which is both capacity efficient and allows the mobile stations current position in critical areas to be updated at a high rate.

The problem is solved essentially by a method in which position measurements of the mobile station are scheduled dependent on the current distance between the mobile station and a critical point e.g. on a defined geographical border. The invention includes an apparatus, e.g. in the form of a network node or a mobile station, and a radio communication network implementing the method.

More specifically, the problem is solved in the following manner. Input data representing the current geographical position of the mobile station is received. The position measurements are scheduled dependent upon the distance between a predefined reference point and the current geographical position of the mobile station as derived from the received input data.

One object of the invention is to provide a way of monitoring the current position of a mobile station which is both capacity efficient and allows the current position of the mobile station to be updated at a high rate when operating in critical areas.

A more specific object is to enable the rate of position updating to be adapted dependening upon whether the mobile station is operating in a critical area requiring frequent position updates or is operating in an area where less frequent position updates suffice.

One advantage afforded by the invention is that it provides a way of monitoring the current position of a mobile station which is both capacity efficient and allows the current position of the mobile station to be updated at a high rate in critical areas.

A more specific advantage of the invention is that it enables a mobile station to adapt the rate of position updating dependent upon whether the mobile station is operating in a critical area requiring frequent position updates or is operating in an area where less frequent position updates suffice.

Another advantage of certain embodiments of the invention is that it enables reliable detection of whether a mobile station engaged in a communication session, e.g. a phone call, enters or exits an area which is predefined independent of the cell structure of a cellular network.

The invention will now be described in more detail with reference to exemplary embodiments thereof and also with reference to the accompanying drawings.

### BRIEF DESCRIPTION OF THE DRAWINGS

Fig. 1 is a view illustrating cells and a home area zone in a cellular network.
Fig. 2 is a schematic view of equipment in the cellular network.
Fig. 3A-3D are block diagrams illustrating the operation of a Location Dependent Billing function according to a first exemplary embodiment of a method according to the invention.
Fig. 4 is a signalling diagram illustrating signal exchange between network nodes.
Fig. 5A-5B are distance-time diagrams illustrating selection of a time interval between position measurements as a function of distance

### DETAILED DESCRIPTION OF THE EMBODIMENTS

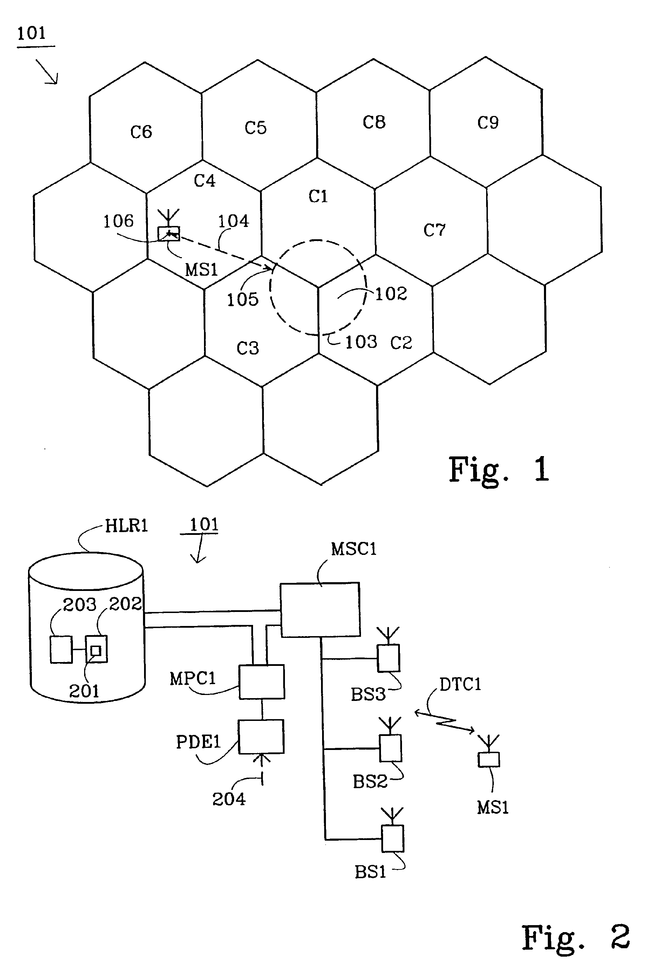

Fig. 1 illustrates an exemplary scenario in which the present invention is applied. A cellular radio communication network 101 provides communication services in a geographical area divided into a number of cells including cells C1-C9. Subscribers of the cellular network 101 are offered a Location Dependent Billing service allowing each subscriber to use the communication services provided by the cellular network 101 at a reduced tariff within a predefined area designated as a home zone area. Fig. 1 illustrates a mobile station MS1 operating in the radio communication network 101. The person using the mobile station MS1 is a registered subscriber of the cellular network 101 having an associated home zone area 102. In this exemplary scenario, the home zone area is provided in the form of a circle 103 (home zone area border) with a central point, defined by its latitude and longitude coordinates, and a radius. Note that the home zone area border need not be aligned with existing cell borders of the cellular network 101, and hence the home zone area may e.g. cover parts of several cells (as illustrated in Fig. 1) or only a part of a single cell. When the subscriber uses his mobile station MS1 to participate in a communication session, e.g. a phone call, within the home zone area 102, the cellular network 101 applies a reduced home zone tariff, whereas when the subscriber uses his mobile station MS1 to participate in a communication session outside the home zone area 102, the cellular network 101 applies a standard tariff to charge the subscriber for the services provided during the communication session. If the mobile station MS1 crosses the home zone area border 103 during a communication session, the communication session is re-rated, i.e. when the cellular network 101 detects that the mobile station MS1 has crossed the home zone area border 103, the tariff applied to the communication session is changed from the home zone tariff to the standard tariff or vice versa dependent on whether the mobile station MS1 exits or enters the home zone area 102. Thus, when determining the total charge for the communication session, one part of the communication session may be charged according to the home zone tariff and the remaining part of the communication session may be charged according to the standard tariff.

In order to be able to re-rate'a communication session when the mobile station MS1 crosses the home zone area border 103, the cellular network 101 needs to monitor the geographical position of the mobile station MS1. Preferrably, the time-delay from the point in time when the mobile station MS1 actually crosses the home zone area border 103 until the cellular network 101 detects the border crossing and re-rates the communication session should be as short as possible. This implies that the geographical position of the mobile station MS1 should be measured as often as possible. However, each position measurement is associated with a certain cost in terms of consumed resources and hence there is also a desire to reduce the total number of position measurements performed.

The present invention addresses the problem of meeting the above mentioned two conflicting desires of enabling the cellular network 101 to quickly detect when the mobile station MS1 crosses the home zone area border 103 and at the same time to reduce the total number of position measurements performed.

The basic idea of the invention is to schedule position measurements of a mobile station dependent upon the current distance between the mobile station and a defined reference point. In the context of the exemplary scenario presented in Fig. 1, the position measurements are scheduled dependent upon the distance 104 between the mobile station MS1 and the point 105 on the home zone area border 103 which is closest to the current geographical position 106 of the mobile station MS1. Thus, when the mobile station MS1 is operating beyond a predetermined distance from the home zone area border 103, position measurements are scheduled less frequent as compared to when the mobile station MS1 is operating closer to the home zone area border 103.

Fig. 2 shows a simplified schematic view of equipment in the cellular network 101 introduced in Fig. 1. The cellular network 101 illustrated in Fig. 2 has a structure conforming to the TIA/EIA-41 specifications. Note that the invention is in no way limited to be applied only in TIA/EIA-41 conformant cellular networks. The cellular network 101 comprises a home location register (HLR) HLR1. The home location register HLR1 holds subscriber data for subscribers of the cellular network 101 and also implements a Location Dependent Billing (LDB) application. The LDB-application is provided as software instructions 201 stored in a memory 202 and executed by a processor 203 in the home location register HLR1. The cellular network 101 further comprises a mobile switching centre (MSC) MSC1. The mobile switching centre MSC1 depicted in Fig. 2 is assumed to include visitor location registration (VLR) functionality, i.e. the control node MSC1 comprises both the Mobile Switching Centre and the Visitor Location Register functional entities defined in TIA/EIA-41. Base stations BS1-BS3 are connected to the first mobile switching centre MSC1 and provide radio coverage in the cells C1-C9 included in the service area of the first mobile switching centre MSC1. Each of the base stations BS1-BS3 serves a group of three sector cells, i.e. the first base station BS1 serves the cells C1-C3, the second base station BS2 serves the cells C4-C6 and the third base station BS3 serves the cells C7-C9.

Since the network elements described above are all well known to a person skilled in the art, the general function of each of these network elements will not be elaborated upon any further.

For the purpose of performing position measurements of mobile stations, including the mobile station MS1, the cellular network 101 further comprises a mobile positioning centre (MPC) MPC1 and a positioning determining entity (PDE) PDE1 in accordance with the modifications of the TIA/EIA-41 network reference model proposed in TIA/EIA PN-3890, "Enhanced Wireless 9-1-1 phase 2". The mobile positioning centre MPC1 is the point of interface of the cellular network 101 for providing geographical position information. It serves as a coordinator between other entitites in the cellular network 101. It receives requests for the geographical position of a specified mobile station, orders the position determining entity PDE1 to measure the geographical position of the specified mobile station and forwards the position measurement results obtained from the position determining entity to the requesting entity.

The position determining entity PDE1 is the entity that actually gathers measurement data 204 representing the current position of a specified mobile station and determines, from said measurement data, the geographical position of the mobile station. This might be accomplished using network based, terminal based or combined network/terminal based technologies.

There are numerous different known methods and arrangements for determining the geographical position of a mobile station which can be used in connection with the present invention. Two examples of such methods and arrangements can be found in the published international patent applications WO 96/31076 and WO 97/30360. Further details on different methods of position measurements can e.g. be found in the article "Position Location Using Wireless Communications on Highways of the Future" by T.S Rappaport, J.H. Reed, and B.D. Woerner in the October 1996 issue of IEEE Communications Magazine. Since these methods and arrangements are well known to a person skilled in the art, the details on how to determine the geographical position of a mobile station will not be elaborated upon any further.

Note that only elements deemed necessary for illustrating the present invention are illustrated in Fig. 2 and thus a radio communication network in which the invention is applied may comprise e.g. a greater number of base stations, mobile switching centres, mobile positioning centres and position determining entities as well as other types of network nodes

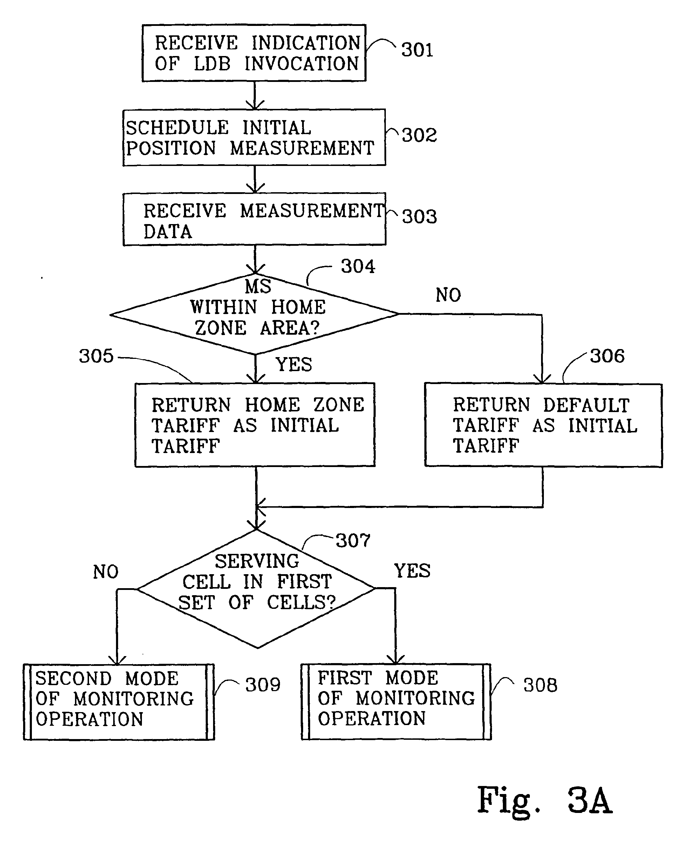

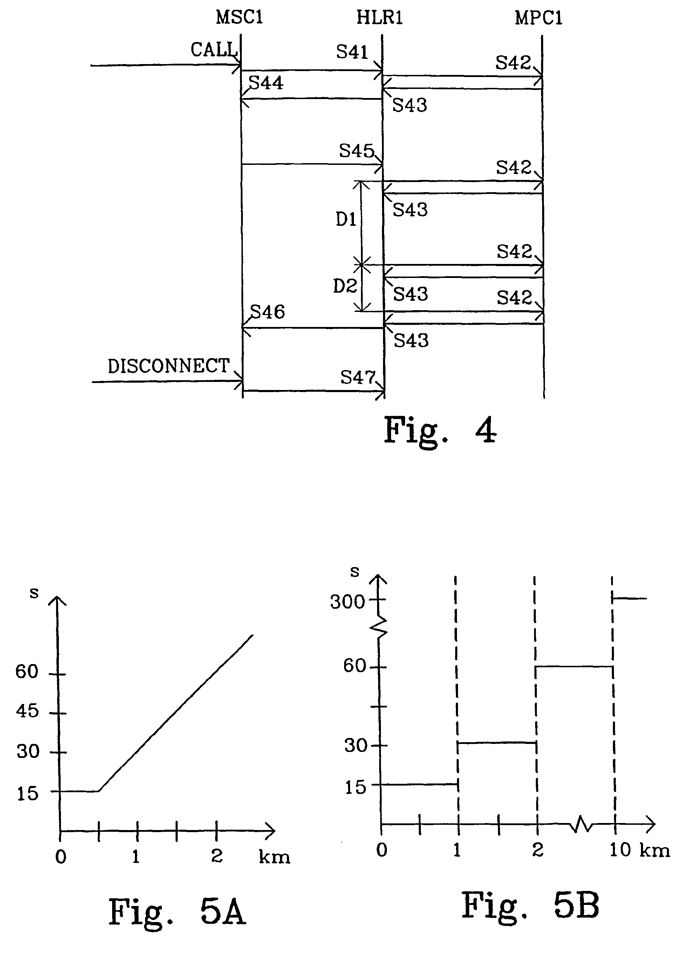

The Location Dependent Billing service offered by the cellular network 101 is implemented in the cellular network 101 according to a first exemplary embodiment of the invention. This first embodiment of the invention is described with the aid of Fig. 3A-3D, which illustrates the operation of the Location Dependent Billing (LDB) application in the home location register HLR1, and Fig. 4, which illustrates a typical example scenario of a sequence of LDB-related signals exchanged for a communication session involving the mobile station MS1.

Refering to Fig. 4, a call request first arrives at the mobile switching centre MSC1. The call request may either be a request for establishment of an outgoing call from the mobile station MS1 or a request for establishment of an incoming call to the mobile station MS1 from another party. The mobile switching centre MSC1 detects, based on subscriber data downloaded to the mobile switching centre MSC1 from the home location register MSC1, that location dependent billing shall be applied to the call. The mobile switching centre MSC1 sends a signal S41 to the home location register HLR1 requesting the LDB-application in the home location register HLR1 to provide a tariff for calculating call charges. The signal S41 includes data identifying the mobile station MS1, e.g. International Mobile Station Identity (IMSI) or Mobile station Identification Number (MIN), the current serving cell, e.g. cell C4 in Fig. 1, and the radio channel allocated to the call, e.g. digital traffic channel DTC1 in cell C4.

Fig. 3A illustrates at step 301 how the signal S41, when received at the home location register HLR1, triggers invocation of the LDB-application.

At step 302 the LDB-application schedules an initial position measurement to determine the current position of the mobile station. The LDB-application requests the mobile positioning centre MPC1 to provide the current position of the mobile station MS1 by sending a position request signal S42 including data identifying the mobile station MS1, the current serving cell C4 and the allocated radio channel DTC1 to the mobile positioning centre MPC1. The mobile positioning centre MPC1 orders the position determining entity PDE1 to determine the current geographical position of the mobile station MS1. The position determining entity PDE1 performs the necessary measurements and reports the resulting current geographical position of the mobile station to the mobile positioning centre MPC1. The mobile positioning centre MPC1 sends a position response signal S43 to the node that requested the position measurement, i.e. the home location register HLR1. The position response signal S43 includes the identity of the mobile station MS1 and its current geographical position.

The LDB-application in the home location register HLR1 receives the current geographical position at step 303 in Fig. 3A and determines at step 304 whether the current geographical position of the mobile station MS1 lies within the subscribers home zone area 102.

If the mobile station MS1 is located within the home zone area 102 (an alternative YES at step 304), the LDB-application returns, at step 305, a signal S44 (see Fig. 4) to the mobile switching centre MSC1 conveying the home zone tariff as the initial tariff which is to be applied to the call. If the mobile station MS1 is located outside the home zone area 102 (an alternative NO at step 304), the LDB-application returns, at step 306, the signal S44 to the mobile switching centre MSC1 conveying the standard tariff as the initial tariff which is to be applied to the call. The mobile switching centre MSC1 applies the received initial tariff when generating charging data for the call.

After providing the mobile switching centre MSC1 with the initial tariff for the call, the LDB-application continues to monitor the geographical position of the mobile station MS1 to detect whether the mobile station MS1 crosses the home zone area border 103 during the call. Thus, at step 307 in Fig. 3A, the LDB-application analyses the initial serving cell identity received in signal S41 to determine whether the mobile station MS1 currently is operating in any one of cells C1-C3. Cells C1-C3 constitue an exemplary predetermined first set of cells providing radio coverage in a geographical area enclosing the home zone area border 103. The first set of cells have been selected so as to ensure that the mobile station MS1 can not cross the home zone area border 103 without entering a cell included in the first set of cells. If the mobile station MS1 was found operating in a cell included in the first set of cells (an alternative YES at step 307), the LDB-application enters a first mode of monitoring operation. If the mobile station MS1 was found operating in a cell not included in the first set of cells (an alternative NO at step 307), the LDB-application instead enters a second mode of monitoring operation.

The first mode of monitoring is used while the mobile station MS1 is operating in a serving cell included in the first set of cells C1-C3. Since the mobile station MS1 may cross the home zone area border 103 while operating in cells included in the first set of cells C1-C3, a sequence of repeated position measurements are scheduled while operating in the first mode. The LDB-application also monitors performed intercell handoffs in the first mode in order to detect if the mobile station MS1 starts operating in a cell outside the first set of cells C1-C3.

The second mode of monitoring is used while the mobile station MS1 is operating in a serving cell not included in the first set of cells C1-C3. Since the mobile station MS1 can not cross the home zone area border 103 while operating in cells not included in the first set of cells C1-C3, no position measurement is scheduled while operating in the second mode. Instead the LDB-application monitors performed inter cell handoffs to detect if the mobile station MS1 enters a cell included in the first set of cells C1-C3.

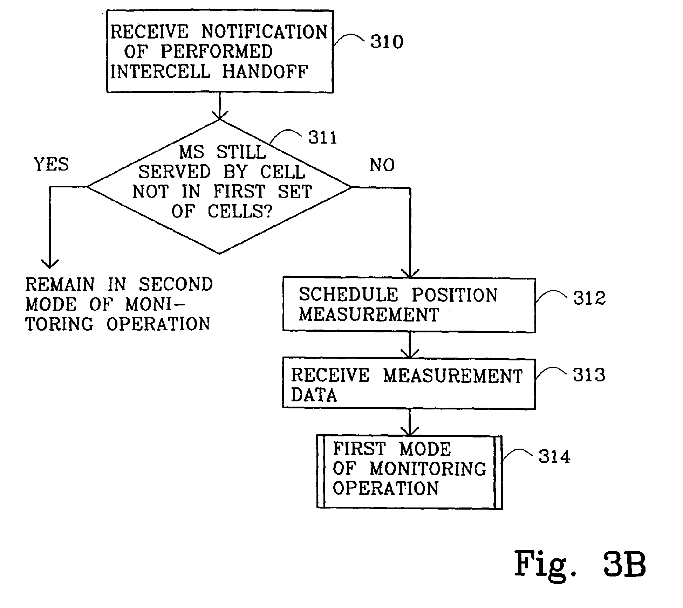

In the exemplary scenario illustrated in Fig. 4, the mobile station MS1 initally operates in cell C4, i.e. a cell not included in the first set of cells C1-C3, and hence the LDB-application enters the second mode of monitoring operation at step 308. If the mobile station MS1 subsequently moves from the initial serving cell C4 into cell C1, an intercell handoff from cell C4 to cell C1 is performed. Fig. 4 illustrates how the mobile switching centre MSC1 notifies the LDB-application of the performed intercell handoff by sending a signal S45 including data identifying the mobile station MS1, the new serving cell C1 and the new radio channel allocated to the call in cell C1. The LDB-application receives the notification signal S45 at step 310 in Fig. 3B and determines at step 311 whether the mobile station MS1 is still served by a cell not included in the first set of cells C1-C3. If the LDB-application determines that the mobile station MS1 is still served by a cell not included in the first set of cells C1-C3 (an alternative YES at step 311), the LDB-application remains in the second mode of monitoring operation. However, since cell C1 is the new serving cell in the example scenario illustrated in Fig. 4, the LDB-application determines that the mobile station MS1 has entered a cell included in the first set of cells C1-C3 (an alternative YES at step 311), and proceeds to schedule a position measurement of the mobile station MS1 at step 312. The LDB-application requests the mobile positioning center MPC1 to provide the current position of the mobile station MS1 by sending a position request signal S42, including data identifying the mobile station MS1, the current serving cell C1 and the radio channel allocated to the call in cell C1, to the mobile positioning centre MPC1. The mobile positioning centre MPC1 orders the position determining entity PDE1 to determine the current geographical position of the mobile station MS1. The position determining entity PDE1 measures and returns the current geographical position of the mobile station to the mobile positioning centre MPC1. The mobile positioning centre MPC1 sends a position response signal S43 to the home location register HLR1. The LDB-application receives the current geographical position of the mobile station MS1 at step 313 in Fig. 3B and enters the first mode of monitoring operation at step 314.

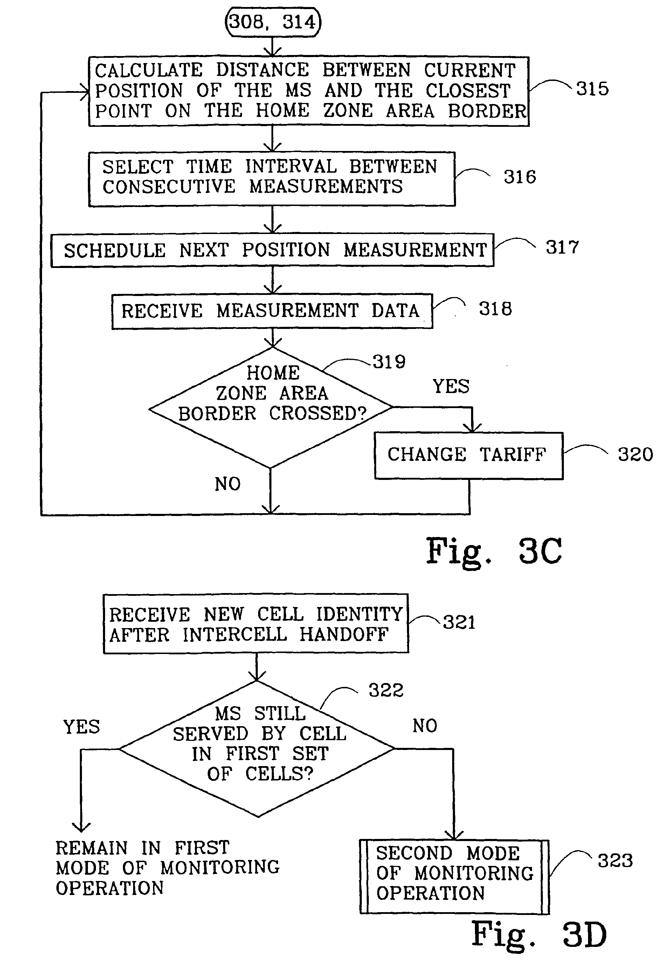

Fig. 3C and 3D illustrate activities performed by the LDB-application in the first mode of monitoring operation.

Upon entering the first mode of operation, either at step 308 in Fig. 3A or step 314 in Fig. 3B, the LDB-application continues processing at step 315 in Fig. 3C by calculating the distance between the current position of the mobile station MS1 and the point on the home zone area border 103 closest to the mobile stations current position. At step 316, the LDB-application selects a time interval between the most recently performed position measurement and the next position measurement to be performed, i.e. between consecutive position measurements. The time interval is selected as the largest of a predefined minimum time interval and the quotient of the distance calculated at step 315 divided by an assumed maximum possible speed of the mobile station MS1. Both the minimum time interval and the assumed maximum speed are configurable parameters of the LDB-application. The minimum time interval between consecutive position measurements is set with regard to the capacity of the positioning system and requirements on how fast re-rating of a call should be performed. The assumed maximum speed of the mobile station is chosen so as to ensure that no mobile station operating in the cellular network 101 can move faster than the assumed maximum speed. Thus, the assumed maximum speed can e.g. be set equal to the maximum speed of a high speed train (200-300 km/hour) or a car driving at a normal maximum speed on a highway (100-120 km/h).

Fig. 5A illustrates an example of how the time interval between consecutive position measurements is selected as a function of the current distance between the mobile station MS1 and the closest point on the home zone area border 103 when the minimum time interval is set to 15 seconds and the assumed maximum speed is set to 120 km/h. As illustrated in Fig. 5A, when the mobile station MS1 is within 0.5 km of the home zone area border 103, the time interval is selected equal to the minimum time interval while if the mobile station is beyond 0.5 km from the home zone area border 103, the time interval is selected as the quotient of the current distance and the assumed maximum speed.

At step 317 in Fig. 3C, the next position measurement is scheduled in accordance with the time interval selected at step 316 so that the time interval between the most recent position measurement and the next position measurement corresponds to the selected time interval. Step 317 may e.g. be implemented in the LDB-application by setting a timer and upon timer expiry requesting the mobile positioning center MPC1 to perform the next position measurement by sending a position request signal S42 to the mobile positioning center MPC1. The mobile positioning centre MPC1 orders the position determining entity PDE1 to determine the current geographical position of the mobile station MS1. The position determining entity PDE1 performs the necessary measurements and reports the current geographical position of the mobile station to the mobile positioning centre MPC1. The mobile positioning centre MPC1 sends a position response signal S43 to the home location register HLR1. The LDB-application receives the current geographical position of the mobile station MS1 at step 318 in Fig. 3C. At step 319, the LDB-application determines whether the mobile station MS1 has crossed the home zone area border 103. If the mobile station MS1 has crossed the home zone area border 103 (an alternative YES at step 319), the LDB-application changes the tariff applied to the call at step 320. To effect the change of tariff, the LDB-application determines whether the mobile station MS1 is currently located inside or outside the home zone area 102 and provides the applicable tariff, i.e. the home zone tariff if the current position of the mobile station MS1 is inside the home zone area 102 or the standard tariff if the current position of the mobile station MS1 is outside the home zone area 102, to the mobile switching centre MSC1 by sending a signal S46 including the mobile station identity and the new tariff. After performing step 320 or if the LDB-application determined at step 319 that the mobile station MS1 has not crossed the home zone area border 103, processing continues at step 315 and steps 315-320 are repeated once again.

In the example scenario illustrated in Fig. 4, a first time interval D1 between consecutive position measurements is selected the first time that step 316 is executed after entering the first mode of monitoring at step 314. The second time that step 316 is executed, the mobile station MS1 has moved closer to the home area zone border 103 and a time interval D2 corresponding to the minimum time interval is selected between consecutive position measurements. During time interval D2, the mobile station MS1 moves into the home zone area 102, i.e. crosses the home zone area border 103. Thus, the next position measurement after time interval D2 indicates that the mobile station MS1 is now inside the home zone area 102 which causes the LDB-application to send a signal S46 to the mobile switching centre MSC1 indicating a change in call tariff from the standard tariff to the home zone tariff. The mobile switching centre MSC1 switches the tariff applied to the call to the home zone tariff. Since the mobile station MS1, in the example scenario of Fig. 4, remains in the home zone area 102 until the call is disconnected, the mobile switching centre MSC1 applies the home zone tariff for the remainder of the call.

Fig. 3D illustrates how the LDB-application monitors performed intercell handoffs while operating in the first mode. At step 321, the LDB-application receives a signal from the mobile services switching centre MSC1 informing the LDB-application that a handoff of the mobile station MS1 has been performed. The LDB application determines at step 322 whether the mobile station MS1 is still served by a cell included in the first set of cells C1-C3. If the LDB-application determines that the mobile station MS1 is still served by one of the cells C1-C3 (an alternative YES at step 322), the LDB-application remains in the first mode of monitoring operation. If instead the LDB-application determines that the mobile station MS1 has entered a cell not included in the first set of cells C1-C3, the LDB-application enters the second mode of monitoring operation at step 323.

In the example scenario of Fig. 4, no handoff is performed after the mobile station MS1 enters the home zone area 102 and consequently steps 321-323 are not performed in this particular example scenario. When the call is disconnected, the mobile switching centre MSC1 informs the LDB-application of this event by sending a disconnect signal S47 to the home location register HLR1 and the LDB-application terminates processing related to the call.

Apart from the exemplary first embodiment of the invention disclosed above, there are several ways of providing rearrangements, modifications and substitutions of the first embodiment resulting in additional embodiments of the invention.

Typically different tariffs are used, both within the home zone area and outside the home zone area, depending on whether the subscriber initiates or receives a call. Different tariffs may also be applied dependent on the time of day when a call is made. The charging may be made both to an ordinary subscription, where the charge later is billed to the subscriber, or it may be made to a so called prepaid subscription, where the subscriber has paid a certain amount of money in advance.

The subscriber may be associated with more than one home zone area, e.g. one zone covering the home location of the subscriber and one zone covering his office. Different tariffs may be used in the different zones associated with the subscriber.

A communication session involving the mobile station may be a traditional cicuit switched call. The communication session may however also be a session in which packet switched data units are exchanged between the mobile station and the cellular network if e.g. the mobile station and the cellular network support the General Packet Radio Service (GPRS). A communication session involving a GPRS capable mobile station may extend from the moment the mobile station is powered on until it is powered off again. Note also that for a class A GPRS capable mobile station, a circuit switched call and packet switched communication may be performed in parallel. Charging may be based on the amount of data exchanged instead of or in combination with the length of the communication session.

For selecting time intervals between position measurements, different maximum speed values may be used in different regions of the cellular network depending on how fast a mobile station can travel in each region. As an example, a lower maximum speed may be applied in a city and a higher maximum speed may be applied outside the city.

Instead of applying a fixed predefined minimum time interval between consecutive position measurements, the minimum time interval may be adapted to the current load of the positioning system, i.e. the mobile positioning centre and the position determining entity. Thus a shorter minimum time interval, which enables the cellular network to detect a crossing of the home zone area border and re-rate a call with less delay, may be allowed during periods of low load. The mobile positioning center could be adapted to monitor the load in the positioning system and inform registered network nodes, e.g. the home location register, of the minimum time interval currently allowed.

A way of reducing the processing load associated with selecting time intervals between consecutive position measurements is to define, when configuring the LDB-application, a set of fixed time intervals associated with different distance ranges. As an example, if the minimum time interval allowed between consecutive position measurements is 15 seconds and the maximum assumed speed of a mobile station is 120 km/h, the following set of time intervals and associated distance ranges may be defined:
15 seconds for a mobile station within 0 km to 1 km from a home zone area border;
30 seconds for a mobile station within 1 km to 2 km from a home zone area border;
60 seconds for a mobile station within 2 km to 10 km from a home zone area border;
300 seconds for a mobile station which is further away from a home zone area border than 10 km.

When selecting a time interval between consecutive position measurements, the time interval is set equal to the predefined time interval associated with a distance range matching the current distance between the mobile station and the home zone area border. Fig. 5B is a distance-time diagram illustrating the relationship between distance ranges and selected time intervals according to the example described above.

The LDB-application illustrated in Fig. 3A-3D provides a combination of two different embodiments of methods for scheduling position measurements according to the present invention. Alternatively the LDB-application could be implemented using only one of said methods.

Thus, one alternative way of implementing the LDB-application would be to modify the first mode of monitoring operation by scheduling repeated position measurements with a fixed time interval, e.g. equal to the minimium time interval allowed, between consecutive position measurements in the first mode of monitoring. According to this alternative implementation of the LDB-application, the LDB-application would use serving cell identities, received in the initial signal S41 invoking the LDB-application and in any subsequent signal S45 informing the LDB-application of a performed intercell handoff, as input data representing the current geographical position of the mobile station. Based on this input data, the LDB-application determines whether the mobile station is operating in a cell included in the first set of cells, i.e. whether the mobile station currently is operating in the geographical area in which the first set of cells provide radio coverage, and schedules repeated position measurements, with a fixed time interval between the position measurements, when the mobile station is operating in a cell included in the first set of cells but no position measurement when the mobile station is operating in a cell not included in the first set of cells. Note that since scheduling of position measurements is performed differently depending on whether the mobile station is operating inside or outside the geographical area served by the first set of cells and which enloses the home zone area border, the scheduling of position measurements is dependent upon the distance between the home zone area border and the current geographical position of the mobile station. Also note that even though no handoff is performed of GPRS mobile stations involved only in packet switched communication with a cellular network, the LDB-application implemented according to this alternative could still be adopted to support rerating of such mobile stations by receiving reports from a Serving GPRS Support Node (SGSN) of cell reselections performed by a mobile station.

Another alternative way of implementing the LDB-application would be to basically eliminate processing according to Fig. 3B, Fig. 3D and steps 307-309 in Fig. 3A and instead continue processing, after steps 305 and 306 in Fig. 3A, at step 315 in Fig. 3C. According to this alternative implementation of the LDB-application, the LDB-application would use measurement data from previously performed position measurements as input data representing the current geographical position of the mobile station, calculate the distance between the mobile station and the home zone area border, i.e. the point on the home zone area which is closest to the current position of the mobile station, and schedule a next position measurement by selecting, dependent upon the calculated distance between the mobile station and the home zone area border, a time interval between the most recent position measurement and the next position measurement.

It is possible to allocate functions differently than as disclosed in the first exemplary embodiment of the invention. The LDB-application may e.g. be provided in the mobile switching centre of Fig. 1 instead of in the home location register, in a service control point of an intelligent network or in a separate home zone server node. The signalling interaction between the different nodes involved, depends of course on the specific function allocation used. If, for an example, the LDB-application would be implemented in the mobile switching centre, it would be appropriate to download data defining the home zone area and tariffs upon downloading other subscriber data to the mobile switching centre. The interactions corresponding to signals S41, S44, and S45-S47 in Fig. 4 would then be performed internally in the mobile switching centre and thus not require any exchange of signals between different network nodes.

The present invention is not limited to be applied only in connection with a Location Dependent Billing service, as illustrated by the exemplary first embodiment of the invention, but may be applied in other situations where the geographical position of a mobile station needs to be monitored and the frequency of position measurements can be derived from the current distance between the mobile station and a predefined reference point. By way of example, the present invention may e.g. be applied in a call barring service restricting the area in which a subscriber is allowed to communicate to a predefined area associated with the subscriber. If the subscriber moves outside this predefined area during a call, the call barring service would disconnect the call. The present invention can also be applied when offering different sets of services or different quality of service in different geographical areas to a subscriber.

The predefined reference point may be defined in several different ways in different applications of the invention.

The reference point may for example be the point on a predefined geographical border, e.g. a home area zone, which is closest to the current position of the mobile station. Note that depending on how the mobile station moves, the current closest point on the geographical border may not, and typically will not, remain the same between position measurements but will change to other points on the geographical border between position measurements. Also note that referring to the distance between a mobile station and a defined geographical border, e.g. a home zone area border, is synonymuous with referring to the distance between the current position of the mobile station and the closest point on the geographical border.

Another example of a reference point is a measured position of a second mobile station. One example of an application where position measurements of a mobile station may be scheduled dependent upon the distance to such a reference point would be in a service offering rendezvouz related call establishment. In an exemplary scenario, two buses travelling towards each other along a highway may need to exchange e.g. passengers or parcels. If both buses are equipped with a mobile station, the rendezvouz related call establishment service could be invoked to automatically establish a phone call between the two bus drivers when the buses are within a certain distance of each other. The phone call serves both to alert the bus drivers to look for each other and enables the bus drivers to communicate with each other e.g. to agree on a suitable place to meet.

It is of course also possible to define a reference point which is a fixed geographical point, i.e. whose geographical coordinates always remain the same between different position measurements. This way of defining a reference point could e.g. be used in the context of a Location Dependent Billing service application where home zone areas are defined as circles having a certain center point and a radius (e.g. as illustrated in Fig. 1). In such a LDB-application, position measurements would then be scheduled dependent upon the current distance between a mobile station and the center point of a home zone area associated with the mobile station by comparing the current distance to the radius of the home zone area and scheduling more frequent position measurements if there is a small difference between the current distance and the radius as compared to if there is a larger difference between the current distance and the radius.

The home location register in the cellular network in the exemplary first embodiment of the invention, is one example of an apparatus with the necessary means for implementing a method for scheduling position measurements according to the present invention. The method for scheduling position measurements may alternatively be implemented by other kind of apparatuses such as other network nodes, in the radio communication network or in another network, or mobile stations. Also note that the present invention can be applied in connection with a wide range of different types of radio communication systems including AMPS, TACS, D-AMPS, PDC, GSM, IS-95, UMTS, and CDMA2000.

## Claims

1. A method for scheduling position measurements of a mobile station (MS1) operating in a radio communication network (101), **characterized in that** the method comprises the steps of:
receiving (301, 310, 321, 303, 313, 318) input data (S41, S45, S43) representing the current geographical position (106) of the mobile station (MS1);
scheduling (312, 317) the position measurements dependent upon the distance (104) between a predefined reference point (105) and the current geographical position (106) of the mobile station (MS1) as derived from the received input data (S41, S45, S43).

2. A method according to claim 1, wherein less frequent position measurements are scheduled when the mobile station (MS1) is beyond a predetermined distance from the predefined reference point (105) as compared to when the mobile station (MS1) is within said predetermined distance from the predetermined reference point (105).

3. A method according to any one of claims 1-2, wherein the radio communication network is a cellular radio communication network (101) serving a geographical area divided into a plurality of cells (C1-C9), wherein the method comprises the step of determining (307, 311, 322), from the received input data (S41, S45), whether the mobile station is operating in a cell included in a predetermined first set of cells (C1-C3) providing radio coverage in a geographical area enclosing the predefined reference point (105) and wherein less frequent position measurements are scheduled when it is determined that the mobile station (MS1) is operating in a cell (C4) not included in the first set of cells (C1-C3) as compared to when it is determined that the mobile station is operating in a cell (C1) included in the first set of cells (C1-C3).

4. A method according to claim 3, wherein the step (301) of receiving input data is performed to receive initial input data (S41) identifying an initial serving cell (C4) in which the mobile station (MS1) initially operates.

5. A method according to claim 4, wherein the step (310, 321) of receiving input data is performed to receive subsequent input data (S45) identifying any subsequent serving cell (C1) the mobile station (MS1) enters upon performing an intercell handoff or a cell reselection.

6. A method according to any one of claims 3-5, wherein no position measurement is scheduled when it is determined that the mobile station (MS1) is operating in a cell (C4) not included in the first set of cells (C1-C3).

7. A method according to any one of claims 3-6, wherein a sequence of position measurements are scheduled (312, 317) when it is determined that the mobile station (MS1) is operating in a cell (C1) included in the first set of cells (C1-C3).

8. A method according to any one of claims 1-2, wherein the method comprises the step of calculating (315) the distance (104) between the predefined reference point (105) and the current geographical position (106) of the mobile station (MS1) as derived from the received input data (S43) and wherein the scheduling of position measurements includes selecting (316), dependent upon the calculated distance between the mobile station and the predefined reference point (105), a time interval (D1, D2) between consecutive position measurements in a sequence of repeated position measurements.

9. A method according to claim 8, wherein the input data reception step (318) is performed to receive measurement data from previously performed position measurements.

10. A method according to any one of claims 8-9, wherein selecting the time interval between consecutive position measurements involves selecting a longer time interval when the mobile station (MS1) is beyond a predetermined distance from the predefined reference point (105) and a shorter time interval when the mobile station (MS1) is within said predetermined distance from the predefined reference point (105).

11. A method according to any one of claims 8-10, wherein the selected time interval (D1) corresponds to the largest of a predefined minimum time interval between consecutive position measurements and the quotient of the calculated current distance (104) between the mobile station (MS1) and the predefined reference point (105) divided by an assumed maximum speed of the mobile station (MS1).

12. A method according to any one of claims 1-11, wherein the predefined reference point (105) is the point on a predefined geographical border (103) which is closest to the current geographical position (106) of the mobile station (MS1).

13. A method according to claim 12, wherein the predefined geographical border (103) is a closed border enclosing a home zone area (102) associated with the mobile station (MS1).

14. A method according to any one of claims 1-11, wherein the predefined reference point is a fixed geographical point.

15. A method according to any one of claims 1-2 or 8-11, wherein the predefined reference point is a measured current geographical position of a second mobile station operating in the radio communication network.

16. A method of providing location dependent billing of communication services provided by a radio communication network (101), the method comprising the steps of:
monitoring (310-319, 321-323) the geographical position of a mobile station (MS1) involved in a communication session;
changing (320) the tariff applied in the communication session upon determining that the mobile station (MS1) crosses a border (103) enclosing a home zone area (102) associated with the mobile station (MS1);
**characterized in that** the monitoring step (310-319, 321-323) includes performing position measurements scheduled in accordance with the method of claim 13.

17. An apparatus (HLR1) for scheduling position measurements of a mobile station (MS1) operating in a radio communication network (101),**characterized in that** the apparatus comprises:
input means (201, 203) for receiving input data (S41, S45, S43) representing the mobile stations (MS1) current geographical position (106);
scheduling means (201, 203) for scheduling the position measurements dependent upon the distance (104) between a predefined reference point (105) and the current geographical position (106) of the mobile station (MS1) as derived from the received input data (S41, S45, S43).

18. An apparatus (HLR1) according to claim 17, wherein the scheduling means (201, 203) are adapted to schedule less frequent position measurements when the mobile station (MS1) is beyond a predetermined distance from the predefined reference point (105) as compared to when the mobile station (MS1) is within said predetermined distance from the predetermined reference point (105).

19. An apparatus (HLR1) according to any one of claims 17-18, wherein the radio communication network is a cellular radio communication network (101) serving a geographical area divided into a plurality of cells (C1-C9), wherein the apparatus (HLR1) comprises determining means (201, 203) for determining, from the received input data (S41, S45), whether the mobile station (MS1) is operating in a cell included in a predetermined first set of cells (C1-C3) providing radio coverage in a geographical area enclosing the predefined reference point (105) and wherein the scheduling means (201, 203) are adapted to schedule less frequent position measurements when it is determined that the mobile station (MS1) is operating in a cell (C4) not included in the first set of cells (C1-C3) as compared to when it is determined that the mobile station (MS1) is operating in a cell (C1) included in the first set of cells (C1-C3).

20. An apparatus (HLR1) according to claim 19, wherein the input means (201, 203) are adapted to receive initial input data (S41) identifying an initial serving cell (C4) in which the mobile station (MS1) initially operates.

21. An apparatus (HLR1) according to claim 20, wherein the input means (201, 203) are adapted to receive subsequent input data (S45) identifying any subsequent serving cell (C1) the mobile station enters upon performing an intercell handoff or a cell reselection.

22. An apparatus (HLR1) according to any one of claims 19-21, wherein the scheduling means (201, 203) are adapted to schedule no position measurement when it is determined that the mobile station (MS1) is operating in a cell (C4) not included in the first set of cells (C1-C3).

23. An apparatus according to any one of claims 19-22, wherein the scheduling means (201, 203) are adapted to schedule a sequence of position measurements when it is determined that the mobile station (MS1) is operating in a cell (C1) included in the first set of cells (C1-C3).

24. An apparatus (HLR1) according to any one of claims 17-18, wherein the apparatus comprises calculating means (201, 203) for calculating the distance (104) between the predefined reference point (105) and the current geographical position (106) of the mobile station (MS1) as derived from the received input data (S43) and wherein the scheduling means (201, 203) are adapted to schedule a sequence of repeated position measurements and to select, dependent upon the calculated distance between the mobile station (MS1) and the predefined reference point (105), a time interval (D1, D2) between consecutive position measurements in the sequence of repeated position measurements.

25. An apparatus (HLR1) according to claim 24, wherein the input means (201, 203) are adapted to receive measurement data from previously performed position measurements.

26. An apparatus (HLR1) according to any one of claims 24-25, wherein the scheduling means (201, 203) are adapted to select a longer time interval (D1) between consecutive position measurements when the mobile station (MS1) is beyond a predetermined distance from the predefined reference point (105) and a shorter time interval (D2) when the mobile station (MS1) is within said predetermined distance from the predefined reference point (105).

27. An apparatus (HLR1) according to any one of claims 24-26, wherein the scheduling means (201, 203) are adapted to select the time interval (D1, D2) between consecutive position measurements as the largest of a predefined minimum time interval between consecutive position measurements and the quotient of the calculated current distance (104) between the mobile station (MS1) and the predefined reference point (105) divided by an assumed maximum speed of the mobile station (MS1).

28. An apparatus (HLR1) according to anyone of claims 17-27, wherein the predefined reference point (105) is the point on a defined geographical border (103) which is closest to the current geographical position (106) of the mobile station (MS1).

29. An apparatus (HLR1) according to claim 28, wherein the defined geographical border is a closed border (103) enclosing a home zone area (102) associated with the mobile station (MS1).

30. An apparatus (HLR1) according to anyone of claims 17-27, wherein the predefined reference point is a fixed geographical point.

31. A network node (HLR1) which is an apparatus according to any one of claims 17-30.

32. A radio communication network (101) comprising a network node (HLR1) according to claim 31.

33. A radio communication network comprising:
means (MPC1, PDE1) for performing position measurements of a mobile station (MS1) involved in a communication session;
means (201, 203) for changing the tariff applied in the communication session upon determining that the mobile station (MS1) crosses a border (103) enclosing a home zone area (102) associated with the mobile station (MS1),
**characterized in that** the radio communication network (101) comprises a network node (HLR1) according to claim 31 which schedules the position measurements of the mobile station (MS1).

## Patentansprüche

1. Ein Verfahren zum Disponieren bzw. zeitlich Einplanen von Positionsmessungen eines in einem Funkkommunikationsnetzwerk (101) betriebenen Mobilfunkendgeräts (MS1, Englisch: Mobile Station), **dadurch gekennzeichnet, dass** das Verfahren die folgenden Schritte umfasst:
Empfangen (301, 310, 321, 303, 313, 318) von Eingabedaten (S41, S45, S43), die die gegenwärtige geographische Position (106) des Mobilfunkendgeräts (MS1) darstellen;
Disponieren (312, 317) der Positionsmessungen in Abhängigkeit von dem Abstand (104) zwischen einem vordefinierten Referenzpunkt (105) und der aus den empfangenen Eingabedaten (S41, S45, S43) abgeleiteten, derzeitigen geographischen Position (106) des Mobilfunkendgeräts (MS1).

2. Ein Verfahren nach Anspruch 1, wobei weniger häufige Positionsmessungen disponiert werden, wenn das Mobilfunkendgerät (MS1) jenseits eines vorbestimmten Abstands von dem vordefinierten Referenzpunkt (105) ist, als im Vergleich dazu, wenn das Mobilfunkendgerät (MS1) innerhalb des vorbestimmten Abstands von dem vorbestimmten Referenzpunk (105) ist.

3. Ein Verfahren nach einem der Ansprüche 1-2, wobei das Funkkommunikationsnetzwerk ein zelluläres Funkkommunikationsnetzwerk (101) ist, das ein in einer Vielzahl von Zellen (C1-C9) unterteiltes geographisches Gebiet bedient, wobei das Verfahren den folgenden Schritt umfasst: Bestimmen (307, 311, 322) aus den empfangenen Eingabedaten (S41, S45), ob das Mobilfunkendgerät in einer Zelle betrieben wird, die in einer vorbestimmten ersten Menge von Zellen (C1-C3) enthalten ist, die eine Funküberdeckung bereitstellt in einem geographischen Gebiet, das den vorbestimmten Referenzpunkt (105) mit einschließt, und wobei weniger häufige Positionsmessungen disponiert werden, wenn bestimmt wird, dass das Mobilfunkendgerät (MS1) in einer Zelle (C4) betrieben wird, die nicht in der ersten Menge von Zellen (C1-C3) enthalten ist, als im Vergleich dazu, wenn bestimmt wird, dass das Mobilfunkendgerät in einer Zelle (C1) betrieben wird, die in der ersten Menge der Zellen (C1-C3) enthalten ist.

4. Ein Verfahren nach Anspruch 3, wobei der Schritt (301) des Empfangens von Eingabedaten ausgeführt wird, um anfängliche Eingabedaten (S41) zu empfangen, die eine anfängliche Dienstzelle (C4) identifizieren, in der das Mobilfunkendgerät (MS1) anfänglich betrieben wird.

5. Ein Verfahren nach Anspruch 4, wobei der Schritt (310, 321) des Empfangens von Eingabedaten ausgeführt wird, um nachfolgende Eingabedaten (S45) zu empfangen, die jegliche nachfolgenden Dienstzellen (C1) identifizieren, in die das Mobilfunkendgerät (MS1) beim Ausführen einer Übergabe zwischen Zellen oder bei einer Zellenneuwahl eintritt.

6. Ein Verfahren nach einem der Ansprüche 3 bis 5, wobei keine Positionsmessung disponiert wird, wenn bestimmt wird, dass das Mobilfunkendgerät (MS1) in einer Zelle (C4) betrieben wird, die nicht in der ersten Menge der Zellen (C1-C3) enthalten ist.

7. Ein Verfahren nach einem der Ansprüche 3-6, wobei eine Sequenz von Positionsmessungen disponiert wird (312, 317), wenn bestimmt wird, dass das Mobilfunkendgerät (MS1) in einer Zelle (C1) betrieben wird, die in der ersten Menge der Zellen (C1-C3) enthalten ist.

8. Ein Verfahren nach einem der Ansprüche 1-2, wobei das Verfahren den folgenden Schritt umfasst:
Berechnen (315) des Abstands (104) zwischen dem vorbestimmten Referenzpunkt (105) und der aus den empfangenen Eingabedaten (S43) abgeleiteten, derzeitigen geographischen Position (106) des Mobilfunkendgeräts (MS1), und wobei das Disponieren der Positionsmessungen folgendes umfasst: Auswählen (316), in Abhängigkeit von dem berechneten Abstand zwischen dem Mobilfunkendgerät und dem vordefinierten Referenzpunkt (105), eines Zeitintervalls (D1, D2) zwischen aufeinanderfolgenden Positionsmessungen in einer Sequenz von wiederholten Positionsmessungen.

9. Ein Verfahren nach Anspruch 8, wobei der Eingabedatenempfangsschritt (318) ausgeführt wird, um Messdaten aus vorhergehend ausgeführten Positionsmessungen zu empfangen.

10. Ein Verfahren nach einem der Ansprüche 8-9, wobei das Auswählen des Zeitintervalls zwischen aufeinanderfolgenden Positionsmessungen folgendes mit einbezieht: Auswählen eines längeren Zeitintervalls, wenn das Mobilfunkendgerät (MS1) jenseits eines vorbestimmten Abstands von dem vordefinierten Referenzpunkt (105) ist, und eines kürzeren Zeitintervalls, wenn das Mobilfunkendgerät (MS1) innerhalb des vorbestimmten Abstands von dem vordefinierten Referenzpunkt (105) ist.

11. Ein Verfahren nach einem der Ansprüche 8-10, wobei das ausgewählte Zeitintervall (D1) dem größten aus den folgenden entspricht: einem vordefinierten minimalen Zeitintervall zwischen aufeinanderfolgenden Positionsmessungen und dem Quotienten des berechneten derzeitigen Abstands (104) zwischen dem Mobilfunkendgerät (MS1) und dem vordefinierten Referenzpunkt (105) dividiert durch eine angenommene maximale Geschwindigkeit des Mobilfunkendgeräts (MS1).

12. Ein Verfahren nach einem der Ansprüche 1-11, wobei der vordefinierte Referenzpunkt (105) der Punkt auf einer vordefinierten geographischen Grenze (103) ist, die der derzeitigen geographischen Position (106) des Mobilfunkendgeräts (MS1) am nächsten ist.

13. Ein Verfahren nach Anspruch 12, wobei die vordefinierte geographische Grenze (103) eine geschlossene Grenze ist, die ein dem Mobilfunkendgerät (MS1) zugeordnetes Heimatzonengebiet (102) umschließt.

14. Ein Verfahren nach einem der Ansprüche 1-11, wobei der vordefinierte Referenzpunkt ein fester geographischer Punkt ist.

15. Ein Verfahren nach einem der Ansprüche 1-2 oder 8-11, wobei der vordefinierte Referenzpunkt eine gemessene derzeitige geographische Position eines in dem Funkkommunikationsnetzwerk betriebenen, zweiten Mobilfunkendgeräts ist.

16. Ein Verfahren zum Bereitstellen von ortsabhängiger Abrechnung von durch ein Funkkommunikationsnetzwerk (101) bereitgestellten Kommunikationsdiensten, das Verfahren umfassend die folgenden Schritte:
Überwachen (310-319, 321-323) der geographischen Position eines Mobilfunkendgeräts (MS1), das in einer Kommunikationssitzung mit einbezogen ist;
Wechseln (320) des in der Kommunikationssitzung angewendeten Tarifs beim Bestimmen, dass das Mobilfunkendgerät (MS1) eine Grenze, die das dem Mobilfunkendgerät (MS1) zugeordnete Heimatzonengebiet (102) umringt, überquert;
**dadurch gekennzeichnet, dass** der Überwachungsschritt (310-319, 321-323) umfasst das nach dem Verfahren des Anspruchs 13 disponierte Ausführen von Positionsmessungen.

17. Eine Vorrichtung (HLR1) zum Disponieren bzw. zeitlich Einplanen von Positionsmessungen eines in einem Funkkommunikationsnetzwerk (101) betriebenen Mobilfunkendgeräts (MS1), **dadurch gekennzeichnet, dass** die Vorrichtung folgendes umfasst:
Eingabemittel (201, 203) zum Empfangen von Eingabedaten (S41, S45, S43), die die derzeitige geographische Position (106) des Mobilfunkendgeräts (MS1) darstellen;
Disponiermittel (201, 203) zum Disponieren der Positionsmessungen in Abhängigkeit von dem Abstand (104) zwischen einem vordefinierten Referenzpunkt (105) und der aus den empfangenen Eingabedaten (S41, S45, S43) abgeleiteten, derzeitigen geographischen Position (106) des Mobilfunkendgeräts (MS1).

18. Eine Vorrichtung (HLR1) nach Anspruch 17, wobei das Disponiermittel (201, 203) dazu ausgebildet ist, weniger häufige Positionsmessungen zu disponieren, wenn das Mobilfunkendgerät (MS1) jenseits eines vorbestimmten Abstands von dem vordefinierten Referenzpunkt (105) ist als im Vergleich dazu, wenn das Mobilfunkendgerät (MS1) innerhalb des vorbestimmten Abstands von dem vorbestimmten Referenzpunkt (105) ist.

19. Eine Vorrichtung (HLR1) nach einem der Ansprüche 17-18, wobei das Funkkommunikationsnetzwerk ein zelluläres Funkkommunikationsnetzwerk (101) ist, das ein in eine Vielzahl von Zellen (C1-C9) unterteiltes geographisches Gebiet bedient, wobei die Vorrichtung (HLR1) umfasst: Bestimmungsmittel (201, 203) zum Bestimmen, aus empfangenen Eingabedaten (S41, S45), ob das Mobilfunkendgerät (MS1) in einer Zelle betrieben wird, die enthalten ist in einer vorbestimmten ersten Menge von Zellen (C1-C3), die eine Funküberdeckung in einem den vordefinierten Referenzpunkt (105) mit einschließenden, geographischen Gebiet bereitstellen, und wobei das Disponiermittel (201, 203) dazu ausgebildet ist, weniger häufige Positionsmessungen zu disponieren, wenn bestimmt wird, dass das Mobilfunkendgerät (MS1) in einer Zelle (C4) betrieben wird, die nicht in der ersten Menge der Zellen (C1-C3) enthalten ist, als im Vergleich dazu, wenn bestimmt wird, dass das Mobilfunkendgerät (MS1) in einer Zelle (C1) betrieben wird, die in der ersten Menge der Zellen (C1-C3) enthalten ist.

20. Eine Vorrichtung (HLR1) nach Anspruch 19, wobei das Eingabemittel (201, 203) dazu ausgebildet ist, anfängliche Eingabedaten (S41) zu empfangen, die eine anfängliche Dienstzelle (C4) identifizieren, in der das Mobilfunkendgerät (MS1) anfänglich betrieben wird.

21. Eine Vorrichtung (HLR1) nach Anspruch 20, wobei das Eingabemittel (201, 203) dazu ausgebildet ist, nachfolgende Eingabedaten (S45) zu empfangen, die eine nachfolgende Dienstzelle (C1) identifizieren, in die das Mobilfunkendgerät beim Ausführen einer Übergabe zwischen Zellen oder bei einer Zellenneuwahl eintritt.

22. Eine Vorrichtung (HLR1) nach einem der Ansprüche 19-21, wobei die Disponiermittel (201, 203) dazu ausgebildet sind, keine Positionsmessung zu disponieren, wenn bestimmt wird, dass das Mobilfunkendgerät (MS1) in einer Zelle (C4), die nicht in der ersten Menge der Zellen (C1-C3) enthalten ist, betrieben wird.

23. Eine Vorrichtung nach einem der Ansprüche 19-22, wobei die Disponiermittel (201, 203) dazu ausgebildet sind, eine Sequenz von Positionsmessungen zu disponieren, wenn bestimmt wird, dass das Mobilfunkendgerät (MS1) in einer Zelle (C1), die in der ersten Menge der Zellen (C1-C3) enthalten ist, betrieben wird.

24. Eine Vorrichtung (HLR1) nach einem der Ansprüche 17 bis 18, wobei die Vorrichtung umfasst:
Berechnungsmittel (201, 203) zum Berechnen des Abstandes (104) zwischen dem vordefinierten Referenzpunkt (105) und der aus den empfangenen Eingabedaten (S43) abgeleiteten, derzeitigen geographischen Position (106) des Mobilfunkendgeräts (MS1), und wobei die Disponiermittel (201, 203) ausgebildet sind zum Disponieren einer Sequenz von wiederholten Positionsmessungen, und zum Auswählen, in Abhängigkeit von dem berechneten Abstand zwischen dem Mobilfunkendgerät (MS1) und dem vorbestimmten Referenzpunkt (105), eines Zeitintervalls (D1, D2) zwischen aufeinanderfolgenden Positionsmessungen in der Sequenz der wiederholten Positionsmessungen.

25. Eine Vorrichtung (HLR1) nach Anspruch 24, wobei das Eingabemittel (201, 203) dazu ausgebildet ist, Messdaten aus vorher ausgeführten Positionsmessungen zu empfangen.

26. Eine Vorrichtung (HLR1) nach einem der Ansprüche 24 bis 25, wobei die Dispositionsmittel (201, 203) dazu ausgebildet sind, ein längeres Zeitintervall (D1) zwischen aufeinanderfolgenden Positionsmessungen auszuwählen, wenn das Mobilfunkendgerät (MS1) jenseits eines vorbestimmten Abstands von dem vordefinierten Referenzpunkt (105) ist, und ein kürzeres Zeitintervall (D2), wenn das Mobilfunkendgerät (MS1) innerhalb des vorbestimmten Abstands von dem vordefinierten Referenzpunkt (105) ist.

27. Eine Vorrichtung (HLR1) nach einem der Ansprüche 24 bis 26, wobei die Disponiermittel (201, 203) dazu ausgebildet sind, das Zeitintervall (D1, D2) zwischen aufeinanderfolgenden Positionsmessungen auszuwählen als das Größte aus folgendem: einem vorbestimmten minimalen Zeitintervall zwischen aufeinanderfolgenden Positionsmessungen und dem Quotienten aus dem berechneten derzeitigen Abstand (104) zwischen dem Mobilfunkendgerät (MS1) und dem vordefinierten Referenzpunkt (105) dividiert durch eine angenommene maximale Geschwindigkeit des Mobilfunkendgeräts (MS1).

28. Eine Vorrichtung (HLR1) nach einem der Ansprüche 17 bis 27, wobei der vordefinierte Referenzpunkt (105) der Punkt auf einer definierten geographischen Grenze (103) ist, die am dichtesten zu der derzeitigen geographischen Position (106) des Mobilfunkendgeräts (MS1) ist.

29. Eine Vorrichtung (HLR1) nach Anspruch 28, wobei die definierte geographische Grenze eine geschlossene Grenze (103) ist, die ein dem Mobilfunkendgerät (MS1) zugeordnetes Heimatzonengebiet (102) umschließt.

30. Eine Vorrichtung (HLR1) nach einem der Ansprüche 17 bis 27, wobei der vorbestimmte Referenzpunkt ein fester geographischer Punkt ist.

31. Ein Netzwerkknoten (HLR1), der eine Vorrichtung nach einem der Ansprüche 17-30 ist.

32. Ein Funkkommunikationsnetzwerk (101) umfassend einen Netzwerkknoten (HLR1) nach Anspruch 31.

33. Ein Funkkommunikationsnetzwerk umfassend:
Mittel (MPC1, PDE1) zum Durchführen von Positionsmessungen eines in einer Kommunikationssitzung mit einbezogenen Mobilfunkendgeräts (MS1);
Mittel (201, 203) zum Bestimmen des in der Kommunikationssitzung angewendeten Tarifs beim Bestimmen, dass das Mobilfunkendgerät (MS1) eine Grenze (103) überquert, die ein dem Mobilfunkendgerät (MS1) zugeordnetes Heimatzonengebiet (102) umschließt,
**dadurch gekennzeichnet, dass** das Funkkommunikationsnetzwerk (101) einen Positionsmessungen des Mobilfunkendgeräts (MS1) disponierenden Netzwerkknoten (HLR1) nach Anspruch 31 umfasst.

## Revendications

1. Procédé de planification de mesures de position d'une station mobile (MS1) fonctionnant dans un réseau de communication radio (101), **caractérisé en ce que** le procédé comprend les étapes consistant à :
recevoir (301, 310, 321, 303, 313, 318) des données d'entrée (S41, S45, S43) représentant la position géographique courante (106) de la station mobile (MS1) ;
planifier (312, 317) les mesures de position en fonction de la distance (104) entre un point de référence prédéfini (105) et la position géographique courante (106) de la station mobile (MS1), dérivée des données d'entrée reçues (S41, S45, S43).

2. Procédé selon la revendication 1, dans lequel des mesures de position moins fréquentes sont planifiées lorsque la station mobile (MS1) est au-delà d'une distance prédéterminée par rapport au point de référence prédéfini (105), par opposition à lorsque la station mobile (MS1) se situe en deçà de ladite distance prédéterminée par rapport au point de référence prédéfini (105).

3. Procédé selon l'une quelconque des revendications 1 à 2, dans lequel le réseau de communication radio est un réseau de communication radio cellulaire (101) desservant une zone géographique divisée en une pluralité de cellules (C1 à C9), dans lequel le procédé comprend l'étape consistant à déterminer (307, 311, 322), à partir des données d'entrée reçues (S41, S45), si la station mobile fonctionne dans une cellule incluse dans un premier ensemble prédéterminé de cellules (C1 à C3) fournissant une couverture radio dans une zone géographique incluant le point de référence prédéfini (105) et dans lequel des mesures de position moins fréquentes sont planifiées lorsqu'il est déterminé que la station mobile (MS1) fonctionne dans une cellule (C4) qui n'est pas incluse dans le premier ensemble de cellules (C1 à C3) par opposition à lorsqu'il est déterminé que la station mobile fonctionne dans une cellule (C1) incluse dans le premier ensemble de cellules (C1 à C3) .

4. Procédé selon la revendication 3, dans lequel l'étape (301) de réception de données d'entrée est exécutée pour recevoir des données d'entrée initiales (S41) qui identifient une cellule de desserte initiale (C4) dans laquelle la station mobile (MS1) fonctionne initialement.

5. Procédé selon la revendication 4, dans lequel l'étape (310, 321) de réception de données d'entrée est exécutée pour recevoir des données d'entrée suivantes (S45) identifiant une cellule de desserte suivante (C1) dans laquelle la station mobile (MS1) pénètre après avoir réalisé un transfert entre cellules ou une resélection de cellule.

6. Procédé selon l'une quelconque des revendications 3 à 5, dans lequel aucune mesure de position n'est planifiée lorsqu'il est déterminé que la station mobile (MS1) fonctionne dans une cellule (C4) qui n'est pas incluse dans le premier ensemble de cellules (C1 à C3).

7. Procédé selon l'une quelconque des revendications 3 à 6, dans lequel une séquence de mesures de position est planifiée (312, 317) lorsqu'il est déterminé que la station mobile (MS1) fonctionne dans une cellule (C1) incluse dans le premier ensemble de cellules (C1 à C3).

8. Procédé selon l'une quelconque des revendications 1 à 2, dans lequel le procédé comprend l'étape consistant à calculer (315) la distance (104) entre le point de référence prédéfini (105) et la position géographique courante (106) de la station mobile (MS1) dérivée des données d'entrée reçues (S43) et dans lequel la planification des mesures de position comprend la sélection (316), en fonction de la distance calculée entre la station mobile et le point de référence prédéfini (105), d'un intervalle de temps (D1, D2) entre des mesures de position consécutives dans une séquence de mesures de position répétées.

9. Procédé selon la revendication 8, dans lequel l'étape de réception de données d'entrée (318) est exécutée pour recevoir des données de mesures de position précédemment réalisées.

10. Procédé selon l'une quelconque des revendications 8 et 9, dans lequel la sélection de l'intervalle de temps entre des mesures de position consécutives comprend la sélection d'un intervalle de temps plus long lorsque la station mobile (MS1) est au-delà d'une distance prédéterminée par rapport au point de référence prédéfini (105) et d'un intervalle de temps plus court lorsque la station mobile (MS1) se trouve en deçà de ladite distance prédéterminée par rapport au point de référence prédéfini (105).

11. Procédé selon l'une quelconque des revendications 8 à 10, dans lequel l'intervalle de temps sélectionné (D1) correspond à la valeur la plus élevée entre un intervalle de temps minimal prédéfini entre des mesures de position consécutives et le quotient de la distance courante calculée (104) entre la station mobile (MS1) et le point de référence prédéfini (105), divisée par une vitesse maximale supposée de la station mobile (MS1).

12. Procédé selon l'une quelconque des revendications 1 à 11, dans lequel le point de référence prédéfini (105) est le point d'une limite géographique prédéfinie (103) qui est le plus proche de la position géographique courante (106) de la station mobile (MS1).

13. Procédé selon la revendication 12, dans lequel la limite géographique prédéfinie (103) est une limite fermée délimitant une zone de rattachement (102) associée à la station mobile (MS1).

14. Procédé selon l'une quelconque des revendications 1 à 11, dans lequel le point de référence prédéfini est un point géographique fixe.

15. Procédé selon l'une quelconque des revendications 1 et 2 ou 8 à 11, dans lequel le point de référence prédéfini est une position géographique courante d'une seconde station mobile fonctionnant sur le réseau de communication radio.

16. Procédé de fourniture d'une facturation en fonction de la position pour des services de communication fournis par un réseau de communication radio (101), le procédé comprenant les étapes consistant à :
surveiller (310 à 319, 321 à 323) la position géographique d'une station mobile (MS1) engagée dans une session de communication ;
modifier (320) le tarif appliqué à la session de communication après avoir déterminé que la station mobile (MS1) franchit une limite (103) délimitant une zone de rattachement (102) associée à la station mobile (MS1) ;
**caractérisé en ce que** l'étape de surveillance (310 à 319, 321 à 323) comprend la réalisation de mesures de position planifiées conformément au procédé selon la revendication 13.

17. Appareil (HLR1) destiné à planifier des mesures de position d'une station mobile (MS1) fonctionnant dans un réseau de communication radio (101), **caractérisé en ce que** l'appareil comprend :
un moyen d'entrée (201, 203) destiné à recevoir des données d'entrée (S41, S45, S43) représentant la position géographique courante (106) de la station mobile (MS1) ;
un moyen de planification (201, 203) destiné à planifier les mesures de position en fonction de la distance (104) entre un point de référence prédéfini (105) et la position géographique courante (106) de la station mobile (MS1), dérivée des données d'entrée reçues (S41, S45, S43).

18. Appareil (HLR1) selon la revendication 17, dans lequel le moyen de planification (201, 203) est conçu pour planifier des mesures de position moins fréquentes lorsque la station mobile (MS1) est au-delà d'une distance prédéterminée par rapport au point de référence prédéfini (105), par opposition à lorsque la station mobile (MS1) se situe en deçà de ladite distance prédéterminée par rapport au point de référence prédéfini (105).

19. Appareil (HLR1) selon l'une quelconque des revendications 17 et 18, dans lequel le réseau de communication radio est un réseau de communication radio cellulaire (101) desservant une zone géographique divisée en une pluralité de cellules (C1 à C9), dans lequel l'appareil (HLR1) comprend un moyen de détermination (201, 203) destiné à déterminer, à partir des données d'entrée reçues (S41, S45), si la station mobile (MS1) fonctionne dans une cellule incluse dans un premier ensemble prédéterminé de cellules (C1 à C3) fournissant une couverture radio dans une zone géographique incluant le point de référence prédéfini (105), et dans lequel le moyen de planification (201, 203) est conçu pour planifier des mesures de position moins fréquentes lorsqu'il est déterminé que la station mobile (MS1) fonctionne dans une cellule (C4) qui n'est pas incluse dans le premier ensemble de cellules (C1 à C3) par opposition à lorsqu'il est déterminé que la station mobile (MS1) fonctionne dans une cellule (C1) incluse dans le premier ensemble de cellules (C1 à C3).

20. Appareil (HLR1) selon la revendication 19, dans lequel le moyen d'entrée (201, 203) est conçu pour recevoir des données d'entrée initiales (S41) qui identifient une cellule de desserte initiale (C4) dans laquelle la station mobile (MS1) fonctionne initialement.

21. Appareil (HLR1) selon la revendication 20, dans lequel le moyen d'entrée (201, 203) est conçu pour recevoir des données d'entrée suivantes (S45) identifiant une cellule de desserte suivante (C1) dans laquelle la station mobile pénètre après avoir réalisé un transfert entre cellules ou une resélection de cellule.

22. Appareil (HLR1) selon l'une quelconque des revendications 19 à 21, dans lequel le moyen de planification (201, 203) est conçu pour ne planifier aucune mesure de position lorsqu'il est déterminé que la station mobile (MS1) fonctionne dans une cellule (C4) qui n'est pas incluse dans le premier ensemble de cellules (C1 à C3).

23. Appareil selon l'une quelconque des revendications 19 à 22, dans lequel le moyen de planification (201, 203) est conçu pour planifier une séquence de mesures de position lorsqu'il est déterminé que la station mobile (MS1) fonctionne dans une cellule (C1) incluse dans le premier ensemble de cellules (C1 à C3).

24. Appareil (HLR1) selon l'une quelconque des revendications 17 et 18, dans lequel l'appareil comprend un moyen de calcul (201, 203) destiné à calculer la distance (104) entre le point de référence prédéfini (105) et la position géographique courante (106) de la station mobile (MS1) dérivée des données d'entrée reçues (S43) et dans lequel le moyen de planification (201, 203) est conçu pour planifier une séquence de mesures de position répétées et pour sélectionner, en fonction de la distance calculée entre la station mobile (MS1) et le point de référence prédéfini (105), un intervalle de temps (D1, D2) entre des mesures de position consécutives dans la séquence de mesures de position répétées.

25. Appareil (HLR1) selon la revendication 24, dans lequel le moyen d'entrée (201, 203) est conçu pour recevoir des données de mesures de position précédemment réalisées.

26. Appareil (HLR1) selon l'une quelconque des revendications 24 et 25, dans lequel le moyen de planification (201, 203) est conçu pour sélectionner un intervalle de temps plus long (D1) entre des mesures de position consécutives lorsque la station mobile (MS1) est au-delà d'une distance prédéterminée par rapport au point de référence prédéfini (105) et un intervalle de temps plus court (D2) lorsque la station mobile (MS1) se trouve en deçà de ladite distance prédéterminée par rapport au point de référence prédéfini (105).

27. Appareil (HLR1) selon l'une quelconque des revendications 24 à 26, dans lequel le moyen de planification (201, 203) est conçu pour sélectionner comme intervalle de temps (D1, D2) entre des mesures de position consécutives la valeur la plus élevée entre un intervalle de temps minimal prédéfini entre des mesures de position consécutives et le quotient de la distance courante calculée (104) entre la station mobile (MS1) et le point de référence prédéfini (105), divisée par une vitesse maximale supposée de la station mobile (MS1).

28. Appareil (HLR1) selon l'une quelconque des revendications 17 à 27, dans lequel le point de référence prédéfini (105) est le point d'une limite géographique définie (103) qui est le plus proche de la position géographique courante (106) de la station mobile (MS1).

29. Appareil (HLR1) selon la revendication 28, dans lequel la limite géographique définie est une limite fermée (103) délimitant une zone de rattachement (102) associée à la station mobile (MS1).

30. Appareil (HLR1) selon l'une quelconque des revendications 17 à 27, dans lequel le point de référence prédéfini est un point géographique fixe.

31. Noeud de réseau (HLR1) qui est un appareil selon l'une quelconque des revendications 17 à 30.

32. Réseau de communication radio (101) comprenant un noeud de réseau (HLR1) selon la revendication 31.

33. Réseau de communication radio comprenant :
un moyen (MPC1, PDE1) destiné à exécuter des mesures de position d'une station mobile (MS1) engagée dans une session de communication ;
un moyen (201, 203) destiné à modifier le tarif appliqué à la session de communication après avoir déterminé que la station mobile (MS1) franchit une limite (103) délimitant une zone de rattachement (102) associée à la station mobile (MS1) ;
**caractérisé en ce que** le réseau de communication radio (101) comprend un noeud de réseau (HLR1) selon la revendication 31, qui planifie les mesures de position de la station mobile (MS1).
